# EUROPEAN PATENT APPLICATION

(11) **EP 4 496 070 A1**
(43) Date of publication of application: **22.01.2025**
(21) Application number: 24183328.4
(22) Date of filing: 20.06.2024
(51) Int. Cl.: H01M 10/42, H01M 50/55, H01M 50/553

(54) **BATTERY PACK**

(30) Priority: 21.07.2023 KR 20230095493; 27.10.2023 KR 20230145278
(71) Applicant: Samsung SDI Co., Ltd., Yongin-si, Gyeonggi-do 17084 (KR)
(72) Inventor: An, Kangsik, 17084 Yongin-si, Gyeonggi-do (KR)
(74) Representative: Gulde & Partner

(57) **Abstract**

A battery pack (10) includes a battery cell (100) including an electrode assembly (110) and an electrode tab (120) extending from the electrode assembly (110), and a protection circuit module (200) on the battery cell (100), the protection circuit module (200) including a substrate (210), a substrate tab (220) on the substrate (210), the substrate tab (220) being connected to the electrode tab (120), and a cut portion (230) in the substrate (210) in a width direction of the substrate (210) at a position corresponding to the substrate tab (220), at least a part of the electrode tab (120) being at a same height as the cut portion (230).

## Description

### BACKGROUND

### 1. Field

One or more embodiments relate to a battery pack.

### 2. Description of the Related Art

Secondary batteries are batteries designed to be chargeable and dischargeable, and can be used as energy sources for, e.g., mobile devices, electric vehicles, hybrid vehicles, electric bicycles, uninterruptible power supplies, and the like. Depending on the type of external devices to which the secondary batteries are applied, the secondary batteries may be used in the form of a single battery cell, or may be used in the form of a module or pack in which a plurality of battery cells are connected and bound into one unit.

As applications employing secondary batteries gradually require larger capacities, the size of battery cells is also increasing to increase energy density. Accordingly, battery packs containing battery cells are increasing in overall size as well as overall length. In order to reduce the overall length of a battery pack, a terrace part of the battery cell may be bent and formed in a horizontal structure. However, when the terrace part is pressed in a bent state, there is a problem in that an electrode assembly is pressed such that tabs of the battery cell are cut or short-circuited.

### SUMMARY

One or more embodiments include a battery pack with a sufficient space between an electrode tab of a battery cell and an outer surface of the battery cell.

A battery pack includes a battery cell, the battery cell including an electrode assembly and an electrode tab extending from the electrode assembly, a substrate, and a protection circuit module on the substrate and including a substrate tab connected to the electrode tab, wherein the protection circuit module includes a cut portion formed at a position corresponding to the substrate tab in a width direction of the substrate.

At least part of the electrode tab may be at a same height as the cut portion.

The electrode tab may be bent at least once and a bent section of the electrode tab may correspond to the cut portion. A bent section of the electrode tab may be at a same height as the cut portion.

The electrode tab may include a first bending portion extending in the height direction of the battery cell, and a second bending portion extending from an end portion of the first bending portion in a direction crossing an extension direction of the first bending portion and connected to the substrate tab. At least part of the first bending portion may be at a same height as the cut portion.

A distance between the first bending portion and the substrate may be shorter than a horizontal distance between the first bending portion and one side surface of the battery cell.

An inner surface of the first bending portion may contact an imaginary line extending along an edge of a side surface of the substrate where the cut portion may be formed.

A distance between one side surface of the substrate where the cut portion may be formed and one side surface of the battery cell may be about two times to about five times a distance between another side surface of the substrate and another side surface of the battery cell.

The first bending portion may be inside the cut portion.

The cut portion may gradually widen outward in the width direction of the substrate.

The cut portion may include an innermost portion close to a center in the width direction of the substrate and having the width greater than the width of the electrode tab, an outermost portion outside in the width direction of the substrate, and a connection portion between the innermost portion and the outermost portion.

Preferably, a width of the cut portion may gradually increase in an order of the innermost portion, the connection portion, and the outermost portion, and a connection portion between the innermost portion, the connection portion, and the outermost portion may have a curved shape.

The cut portion may be apart from an end portion of the substrate tab, and a depth of the cut portion may have a size less than half of the width of the substrate.

The center of the cut portion may be coaxial with the center of the substrate tab.

The battery cell may further include an exterior member accommodating the electrode assembly and including a sealing portion at an edge of the battery cell.

Preferably, the sealing portion comprises: a terrace portion on top of the battery cell to correspond to the electrode tab and a side sealing portion at both side surfaces of the exterior member. Preferably, the side sealing portion is bent toward the electrode tab while the terrace portion and the electrode tab are in a bent state.

The battery pack may further include an insulating tape on one or more of the battery cell and the protection circuit module.

The insulating tape may comprise a first tape on top of the protection circuit module and covering top portions of a front surface and a rear surface of the battery cell, wherein a distance between the electrode tab and the first tape is greater than a distance between the first tape and a second side of a first side of the substrate where the electrode tab is located.

The insulating tape may further include a second tape on both side surfaces of the battery cell and between the protection circuit module and the battery cell.

The insulating tape may further include a third tape between a top portion of the battery cell and the terrace portion that is bent and the electrode tab, and a fourth tape between the bent terrace portion and an upper surface of the electrode tab.

The substrate tab may include a first part on an upper surface of the substrate, and a second part extending from the first part, bent toward an upper surface of the first part, and apart from the upper surface of the first part.

Preferably, part of the electrode tab is between the first part and the second part and connected to one or more of the first part and the second part.

The second part may be longer than the first part, and the electrode tab may be connected to a lower surface of the second part.

The protection circuit module may include a notch that is formed by cutting part of the substrate at a position corresponding to the substrate tab, has a center that is coaxial with a center of the cut portion, and has the width narrower than the width of the cut portion.

The electrode assembly may include a first area and a second area located at the opposite side of the first area and having a smaller size than the size of the first area.

Preferably, the electrode tab is biased to one side from a center of the electrode assembly in a thickness direction of the battery cell.

The electrode tab may be bent toward the first area, and the cut portion may be above the first area.

The electrode tab may be bent toward the second area, and the cut portion may be above the second area. Preferably, a horizontal distance between the electrode tab and one side surface of the battery cell is shorter than a horizontal distance between an opposite side of the substrate where the electrode tab is located and another side surface of the battery cell.

### BRIEF DESCRIPTION OF THE DRAWINGS

Features will become apparent to those of skill in the art by describing in detail exemplary embodiments with reference to the attached drawings, in which:
FIG. 1 illustrates a perspective view of a battery pack according to embodiments;
FIG. 2 illustrates a perspective view of a battery cell in the battery pack of FIG. 1;
FIGS. 3 to 5 illustrate perspective views of an assembly process of a battery pack, according to embodiments;
FIG. 6 illustrates a plan view of a protection circuit module according to embodiments;
FIG. 7 is a cross-sectional view along line VII-VII' of FIG. 1;
FIG. 8 illustrates a state in which an electrode tab in FIG. 7 is in a cut portion; and
FIG. 9 illustrates a state in which an electrode tab in FIG. 7 is on the opposite side.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Some embodiments of the present disclosure and a method according thereto may be understood with reference to the detailed description of the embodiments and the drawings. The described embodiments have various modified examples and may be implemented in other forms, which are not limited to the embodiments described in the present specification. Furthermore, some or the whole of the features of each of various embodiments of the present disclosure may be combined with each other. Each embodiment may be implemented independently or in relation to each other. The described embodiments are provided as examples to make the present disclosure thorough and complete, and also are intended to completely convey the idea of the present disclosure to those skilled in the art to which the present disclosure pertains. Accordingly, for full understanding of embodiments of the present disclosure, processes, elements, and technologies, which are unnecessary to a person skilled in the art, may not be described.

Throughout the drawings, the relative sizes of elements, layers, and areas may be exaggerated for clarity. The use of hatching and/or shading in the accompanying drawings is generally provided to clarify boundaries between adjacent elements. Accordingly, the presence or absence of hatching or shading does not indicate the desired forms or requirements for a specific material, material characteristic, dimensions, proportions, commonality between image elements, and/or other characteristics, properties, attributes, etc. of an element that is not specified.

Various embodiments are described herein with reference to cross-sectional examples, which are schematic illustrations of embodiments and/or intermediate structures. Thus, the appearance of the drawings may vary, for example, as a result of manufacturing techniques and/or tolerances. In addition, the specific structural or functional descriptions disclosed in this specification are merely examples to explain an embodiment according to the concept of the present disclosure. Accordingly, embodiments disclosed herein should not be construed as being limited to the shapes of illustrated areas, and include variations in shape due to manufacturing for example.

Numerous specific details are set forth in the specification to provide a thorough understanding of various embodiments. However, various embodiments may be practiced without or including one or more of these specific details. In other cases, well-known structures and devices are shown in the form of a block diagram to avoid unnecessarily obscuring various embodiments.

As illustrated in the drawings, in order to explain the relationship between one element or feature and another element or feature, for ease of explanation here, spatially relative terms such as "bottom", "top", "lower portion", "upper portion", etc. may be used. Spatially relative terms are intended to include various directions of a device in use or operation in addition to the directions shown in the drawings. For example, when the device in the drawing is turned over, other elements or features described as "bottom" or "lower portion" will face the "top" of the other elements or features. Accordingly, as illustrative terms, "bottom" and "lower portion" can include both up and down directions. The device may be oriented in different directions (e.g., rotated 90 degrees or in other directions), and the spatially relative descriptions used in the specification should be interpreted accordingly. Likewise, when a first part is described as being placed "above" a second part, this means that the first part is placed above or below the second part.

In addition, the expression "viewed from a plane" means when an object part is viewed from above, and the expression "in a schematic cross-sectional view" means when a schematic cross-sectional view is taken by cutting the object part vertically. The term "viewed from the side" means that a first object can be above, below, or on the side surface of a second object, and vice versa. Additionally, the term "overlapping" or "superimposing" may include layers, stacks, surfaces, extension, covering, or partially covering, or any other suitable term that a person skilled in the art understands. The expression "does not overlap" may include meanings such as "apart from something" or "separated from something" and any other suitable equivalent recognized and understood by a person skilled in the art. The terms "face" and "surface" may mean that a first object can directly or indirectly face a second object. When there is a third object between the first and second objects, the first and second objects face each other, but can be indirectly understood as opposites to each other.

It will be understood that when a layer, region, or component is referred to as being "formed on," "connected to," or "coupled to" another layer, region, or component, it can be directly or indirectly formed on the other layer, region, or component. That is, for example, intervening layers, regions, or components may be present. In addition, it can collectively refer to the direct or indirect combination or connection or the integrated or non-integrated combination or connection of elements, layers, areas, or components and so that one or more elements, layers, areas, or components can exist. For example, when an element, layer, area or component is referred to as "electrically connected to" or "electrically coupled" to another element, layer, area or component, it means that it is directly electrically connected to or electrically coupled or connected to another element, layer, area or component. However, "direct connecting" or "direct coupling" means that one component directly connects or couples to another component without an intermediate component or is on top of another component. Furthermore, in the specification, when a part of a layer, film, area, plate, etc. is formed in another part, the formation direction is not limited to the upper direction and includes that the part is formed on the side surface or lower portion. Reversely, when a part of a layer, film, area, plate, etc. is formed "below" another part, not only the part is "immediately below" the other part, but also there is another part between the part and the other part. Meanwhile, other expressions that describe relationships between components, such as "between", "right between" or "adjacent to" and "immediately adjacent to", may also be interpreted similarly. Furthermore, when an element or layer is referred to as being "between" two elements or layers, it may be the only element between the two elements or layers, or there may be other elements therebetween.

For the purposes of this specification, expressions such as "at least one or more" or "any one" do not limit the order of individual elements. For example, "at least one of X, Y, and Z," "at least one of X, Y, or Z," and "at least one selected from the group consisting of X, Y, and Z" may include X alone, Y alone, Z alone, and any combination of two or more of X, Y, and Z. Similarly, expressions such as "at least one of A and B" and "at least one of A or B" may include A, B, or A and B. In the specification, "or" generally means "and/or," and the term "and/or" includes any combination of one or more related list items. For example, an expression such as "A and/or B" may include A, B, or A and B.

Although terms such as "first," "second," "third," etc. may be used herein to describe various elements, components, areas, layers, and/or cross-sections, such elements, components, areas, layers, and/or cross-sections are not limited by these terms. These terms are used to distinguish one element, component, area, layer or cross-section from another element, component, area, layer or cross-section. Accordingly, the first element, component, area, layer, or cross-section described below may be referred to as the second element, component, area, layer, or cross-section without departing from the scope of the present invention. Describing an element as a "first" element may not require or imply the presence of a second element or any other element. Terms such as "first," "second," etc. may be used in the specification to distinguish different categories or element sets. For clarity, terms such as "first" and "second" may be expressed as "first category (or first set)", "second category (or second set)", and the like, respectively.

In the specification, as used in the singular, the singular is intended to include the plural, and the plural is also intended to include the singular, unless the context clearly dictates otherwise. The terms "comprise," "have," and the like when used in the specification, mean to designate the presence of a specified feature, integer, or step. These expressions do not exclude the presence or addition of one or more other functions, steps, operations, components, and/or groups thereof.

When one or more embodiments may be implemented differently, the specific process order may be performed differently from the described order. For example, the two processes described in succession may be performed substantially simultaneously or may be performed in the reverse order from the described order.

As used herein, the terms "substantially," "about," and similar terms are used as terms of approximation and not as terms of degree, and are intended to account for the inherent variations in measured or calculated values that would be recognized by those of ordinary skill in the art. "About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ±30%, 20%, 10%, or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

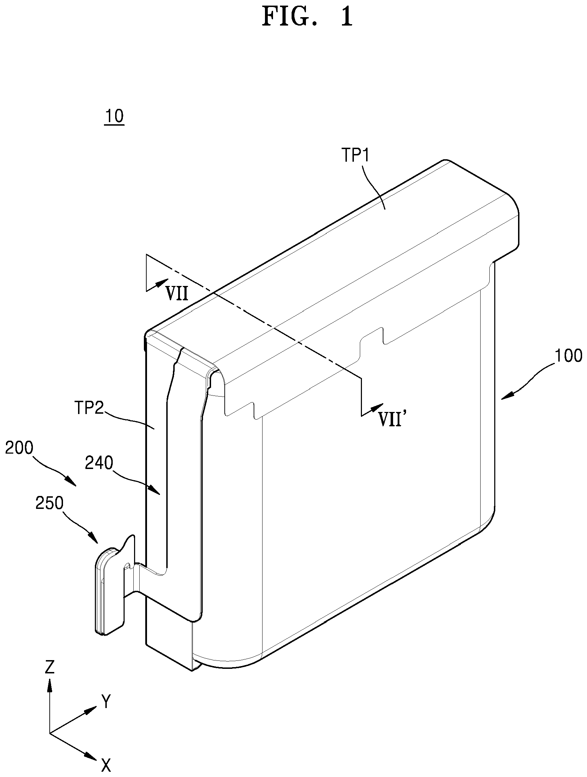

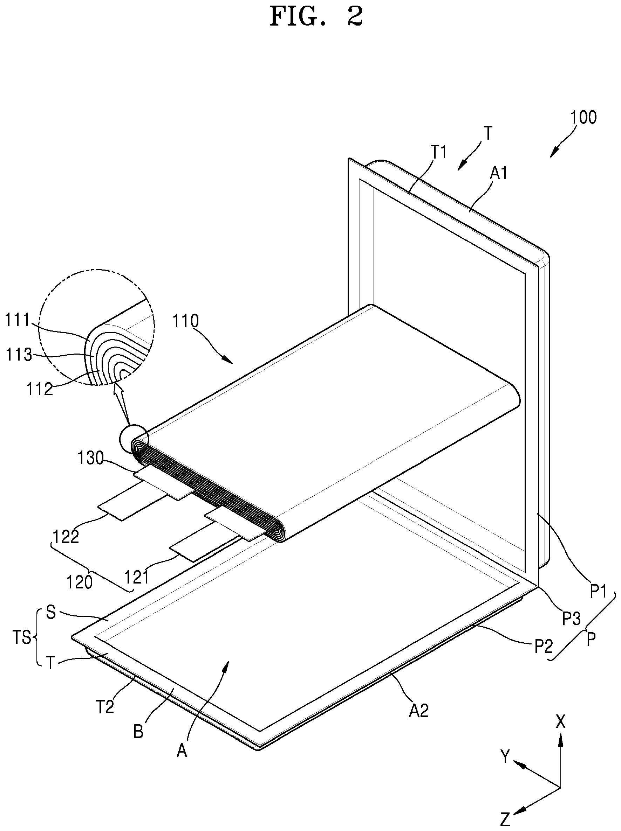

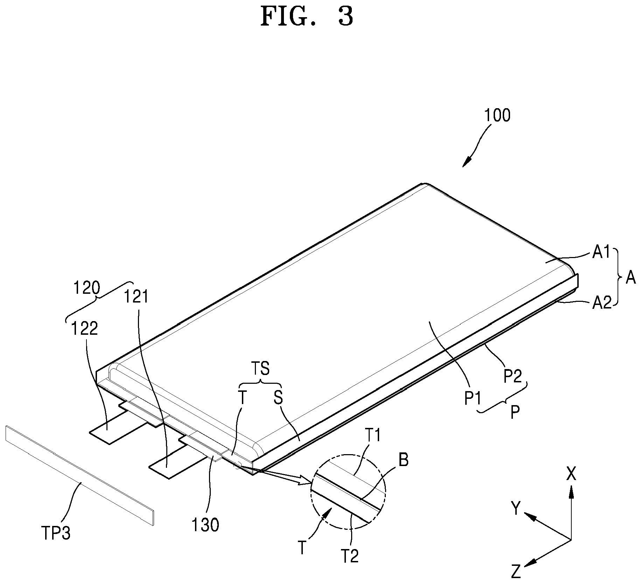

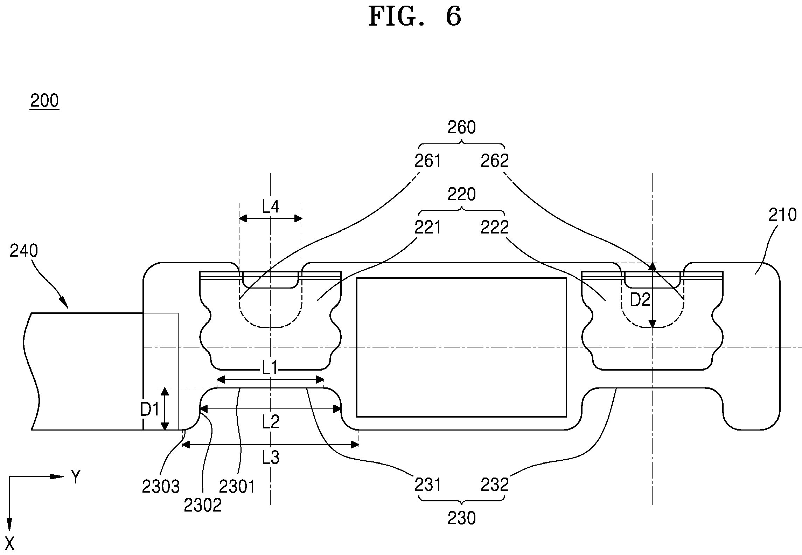

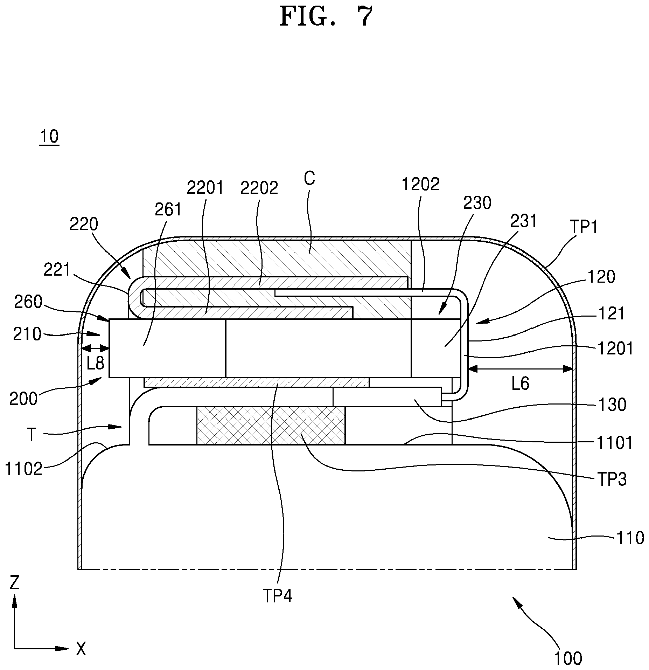

FIG. 1 illustrates a battery pack 10 according to embodiments. FIG. 2 illustrates a battery cell 100 in the battery pack 10 of FIG. 1. FIGS. 3 to 5 illustrate an assembly process of the battery pack 10, according to embodiments. FIG. 6 illustrates a protection circuit module 200 according to embodiments. FIG. 7 is a cross-sectional view of the battery pack 10 taken along line VII-VII' of FIG. 1.

Referring to FIGS. 1 to 7, the battery pack 10, e.g., a pouch type battery, may include the battery cell 100 and the protection circuit module 200. For example, as illustrated in FIG. 1, the battery pack 10 may have a shape in which at least one surface (e.g., a surface parallel to a Y-Z plane of FIG. 1) is thin and flat shaped. At least part of the battery pack 10 may have a curved shape. For example, both side surfaces (e.g., the left and right sides in FIG. 1) of the battery pack 10 may have a curved shape. The battery pack 10 may include one or more tapes to support and protect the battery cell 100 and the protection circuit module 200. The tapes may be at one or more of the battery cell 100 and the protection circuit module 200 and may include an insulating material.

For example, the battery pack 10 may include the battery cell 100 including an electrode assembly 110 and an electrode tab 120 extending from the electrode assembly 110, and the protection circuit module 200 including a substrate 210 and a substrate tab 220 on the substrate 210 and connected to the electrode tab 120. The protection circuit module 200 may include a cut portion 230 formed at a position corresponding to the substrate tab 220 in a width direction of the substrate 210. At least part of the electrode tab 120 is at the same height as the cut portion 230.

As illustrated in FIG. 2, the battery cell 100 may include the electrode assembly 110, the electrode tab 120 protruding from the electrode assembly 110, an insulating tape 130 on the electrode tab 120, and an exterior member P. The electrode assembly 110 may be accommodated inside the exterior member P.

The electrode assembly 110 may include a first electrode plate 111 and a second electrode plate 112 having polarities opposite to each other, and a separator 113 between the first electrode plate 111 and the second electrode plate 112. The electrode assembly 110 may be formed, e.g., in a roll type in which the first electrode plate 111, the second electrode plate 112, and the separator 113 are wound in a roll shape. For example, the winding axis of the electrode assembly 110 may be parallel to a length direction (e.g., a Z-axis direction in FIG. 2) of the battery cell 100. In another example, the electrode assembly 110 may be formed in a stack type in which a plurality of first electrode plates 111 and second electrode plates 112, and the separator 113 are stacked. In yet another example, the electrode assembly 110 may be a mixed shape of the roll type and the stack type. While the first electrode plate 111 may be a negative pole, the second electrode plate 112 may be a positive pole. Alternatively, while the first electrode plate 111 may be a positive pole, the second electrode plate 112 may be a negative pole.

The first electrode plate 111 may be formed by coating a first electrode active material, e.g., graphite, carbon, or the like, on a first electrode current collector plate formed by a metal foil, e.g., copper, a copper alloy, nickel, or a nickel alloy. The first electrode plate 111 may include a first non-coating portion that is an area where the first electrode active material is not coated, and at least part of the first non-coating portion may include a first electrode tab 121. The first electrode tab 121 may be a path for a current flow between the first electrode plate 111 and a first current collecting portion. The first electrode tab 121 may be formed in advance, when the first electrode plate 111 is manufactured, by cutting the first electrode plate 111 such that at least part of the first electrode plate 111 protrudes outwardly from the electrode assembly 110. Alternatively, without a separate cutting process, the first electrode tab 121 may protrude outwardly from the electrode assembly 110 further than the separator 113.

The second electrode plate 112 may be formed by coating a second electrode active material, e.g., a transition metal oxide and the like, on a second electrode current collector plate formed by a metal foil, e.g., aluminum or an aluminum alloy. The second electrode plate 112 may include a second non-coating portion that is an area where the second electrode active material is not coated, and at least part of the second non-coating portion may include a second electrode tab 122. The second electrode tab 122 may be a path for a current flow between the second electrode plate 112 and a second current collecting portion. The second electrode tab 122 may be formed in advance, when the second electrode plate 112 is manufactured, by cutting the second electrode plate 112 such that at least part of the second electrode plate 112 protrudes outwardly from the electrode assembly 110. Alternatively, without a separate cutting process, the second electrode tab 122 may protrude outwardly from the electrode assembly 110 further than the separator 113.

The electrode assembly 110 may be surrounded by the exterior member P. For example, as illustrated in FIG. 2, the electrode assembly 110 may have a size smaller than the exterior member P and may be inside the exterior member P and connected to the protection circuit module 200 through the electrode tab 120.

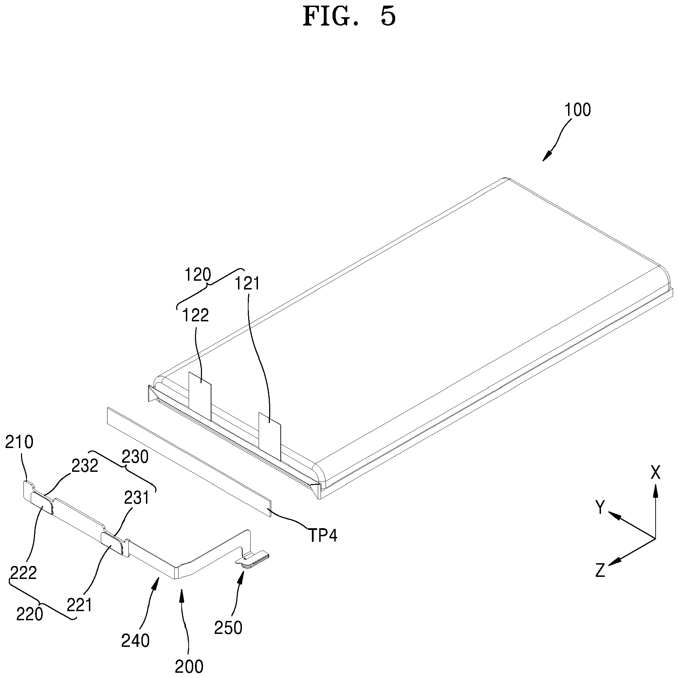

The electrode tab 120 may be connected to the electrode assembly 110. The electrode tab 120 may be electrically connected to the electrode assembly 110, and may extend from the electrode assembly 110 through the exterior member P surrounding the electrode assembly 110. For example, the electrode tab 120 may be drawn out through a terrace portion T of the exterior member P. For example, as illustrated in FIG. 2, the electrode tab 120 may include the first electrode tab 121 and the second electrode tab 122 having opposite polarities, which may be electrically connected to the first electrode plate 111 and the second electrode plate 112, respectively. Furthermore, the electrode tab 120 may be connected to the substrate tab 220. For example, referring to FIG. 5, the first electrode tab 121 may be connected to a first substrate tab 221, and the second electrode tab 122 may be connected to a second substrate tab 222. The electrode tab 120 may be connected to the substrate tab 220 through, e.g., welding, bolting, or the like.

The insulating tape 130 may be attached to the electrode tab 120 so as to provide insulation and sealing between the electrode tab 120 and the exterior member P. For example, as illustrated in FIG. 2, the insulating tape 130 may be at one side of the electrode tab 120 close to the electrode assembly 110. One side of the insulating tape 130 may be in contact with the electrode assembly 110.

The first electrode tab 121 and the second electrode tab 122 may be on the same surface of the electrode assembly 110. For example, as illustrated in FIG. 2, the first electrode tab 121 and the second electrode tab 122 may extend from one surface (e.g., the surface of the electrode assembly 110 in the Z-axis direction in FIG. 2) parallel to the winding axis of the electrode assembly 110. In another example, the first electrode tab 121 and the second electrode tab 122 may be on different surfaces of the electrode assembly 110. The first electrode tab 121 and the second electrode tab 122 are separated from each other, and the first current collecting portion and the second current collecting portion may be welded and connected thereto, respectively.

The electrode tab 120 may be bent at least once or more. For example, as illustrated in FIG. 5, the electrode tab 120 may be bent at least once or more, and a bent section of the electrode tab 120 may correspond to (e.g., face and overlap in the Z-axis direction) the cut portion 230.

While being connected to the substrate tab 220 of the protection circuit module 200, the electrode tab 120 may be in a bent state, not extending straight in the length direction (e.g., the Z-axis direction in FIG. 2) of the battery cell 100. For example, as illustrated in FIGS. 3 to 5, the electrode tab 120 may extend straight in the length direction of the battery cell 100 and then may be bent in a thickness direction (e.g., an X-axis direction in FIG. 5) of the battery cell 100. The terrace portion T may be bent together with the electrode tab 120 in the same direction (FIG. 7). While the electrode tab 120 is in the bent state, a fourth tape TP4 and the protection circuit module 200 may be sequentially provided thereabove, e.g., the fourth tape T4 may be between the bent electrode tab 120 and the cut portion 230 of the protection circuit module 200. The electrode tab 120 may be bent again toward the substrate tab 220 in the thickness direction of the battery cell 100 (FIG. 7).

As illustrated in FIG. 7, the electrode tab 120 may include a first bending portion 1201 extending in the height direction of the battery cell 100 (i.e., in the Z axis direction) and a second bending portion 1202 extending from an end portion of the first bending portion 1201 in a direction crossing the extension direction of the first bending portion 1201 (i.e., in the X axis direction). At least part of the first bending portion 1201 may be at the same height as the cut portion 230, e.g., at least part of the first bending portion 1201 (e.g., a portion the electrode tab 120 that faces and overlaps the cut portion 230 in FIG. 5) may be at the same height as the cut portion 230 along the Z-axis direction.

The electrode tab 120 may include the first bending portion 1201 extending upwardly from the insulating tape 130 in the height direction of the battery cell 100 and the second bending portion 1202 extending from the end portion of the first bending portion 1201 in the thickness direction of the battery cell 100 toward the left side (based on FIG. 7). As such, as the electrode tab 120 is bent once or more, e.g., compared with a case of an electrode tab extending vertically straight (i.e., without any bends), the vertical length of the electrode tab 120 may be reduced, e.g., as measured along the Z-axis direction between opposite outer ends. Accordingly, the overall lengths of the battery cell 100 and the battery pack 10 including the battery cell 100 may be reduced.

For example, as illustrated in FIG. 7, the electrode tab 120 may be bent a total of three times as a portion extending from the electrode assembly 110 (i.e., a portion extending directly from the terrace portion T and wrapped with the insulating tape 130) is bent with the terrace portion T to extend in the X-axis direction, another portion is bent vertically past an end portion of the insulating tape 130 (i.e., the first bending portion 1201) to extend in the Z-axis direction, and yet another portion is bent toward the substrate tab 220 (i.e., the second bending portion 1202) to extend in the X-axis direction and to vertically (i.e., in the Z-axis direction) overlap the terrace portion T and the insulating tape 130. In other words, the electrode tab 120 in FIG. 5 may be bent two more times, such that an edge of the electrode tab 120 (i.e., the second bending portion 1202 in FIG. 7) extends in the X-axis direction to be inserted into the opening of the substrate tab 220 in FIG. 5 (i.e., between the first and second parts 2201 and 2202 of the substrate tab 220 in FIG. 7 to be described later). In another example, the bending number of the electrode tab 120 may be larger than three and may vary considering the size and specification of the battery cell 100 and the battery pack 10, the connection structure of an external device, and the like.

The distance between the first bending portion 1201 and the substrate 210 may be shorter than a horizontal distance L6 between the first bending portion 1201 and one side surface of the battery cell 100.

Although only the first electrode tab 121 is illustrated in FIG. 7, the second electrode tab 122 may have the same connection structure to the substrate tab 220 and the same bending structure as the first electrode tab 121. In other words, the second electrode tab 122 may include the first bending portion 1201 and the second bending portion 1202.

Referring back to FIG. 2, the exterior member P may be formed as a flexibility exterior member, e.g., a pouch. The exterior member P may include an insulating layer formed on both sides of a thin metal layer, e.g., aluminum, and may be formed through a forming process, e.g., drawing. The exterior member P may include a first exterior member P1 and a second exterior member P2 facing each other with the electrode assembly 110 therebetween. The first exterior member P1 and the second exterior member P2 may each include an inner space, and after the electrode assembly 110 is placed in one inner space of the first exterior member P1 or the second exterior member P2, the other exterior member may cover over the electrode assembly 110.

The exterior member P may include a folding portion P3 for folding the first exterior member P1 and the second exterior member P2 to overlap each other. By folding the first exterior member P1 and the second exterior member P2 with respect to the folding portion P3 in a direction facing each other, the exterior member P accommodating the electrode assembly 110 may be formed. For example, as illustrated in FIG. 2, while the first exterior member P1 and the second exterior member P2 are folded with respect to the folding portion P3, a sealing portion TS for sealing an accommodation portion A (in which the electrode assembly 110 is accommodated) may be formed. The sealing portion TS may be formed along the perimeter of the accommodation portion A to seal the accommodation portion A in which the electrode assembly 110 is accommodated. For example, except for the side of the exterior member P where the folding portion P3 is formed, the sealing portion TS may be formed along the other sides of the exterior member P. For example, the exterior member P may substantially have a cuboid shape as the first exterior member P1 and the second exterior member P2 are folded. The sealing portion TS may be continuously formed along a short side portion and long side portions of the exterior member P, except for a short side portion including the folding portion P3 (e.g., the folding portion P3 may be opposite a side of the electrode assembly 110 including the electrode tab 120).

The sealing portion TS may include the terrace portion T from which the electrode tab 120 electrically connected to the electrode assembly 110 is led out, and a side sealing portion S contacting the terrace portion T and extending in a direction crossing the terrace portion T. For example, as illustrated in FIG. 2, the terrace portion T may be formed at one short side portion of the exterior member P opposite the folding portion P3, and the side sealing portion S may be formed at a pair of the long side portions of the exterior member P. In other words, the terrace portion T extending in a direction crossing the electrode tab 120 may seal the accommodation portion A, and the side sealing portion S extending in a direction crossing the terrace portion T may seal the accommodation portion A. The terrace portion T and the side sealing portion S contacting each other and continuously extending may form the sealing portion TS and seal the accommodation portion A together.

The sealing portion TS may be formed as the first exterior member P1 and the second exterior member P2 are folded in a direction facing each other. For example, assuming that one surface of the first exterior member P1 and one surface of the second exterior member P2 are external surfaces, the sealing portion TS may include a sealing surface B that is an inner surface of each of the first exterior member P1 and the second exterior member P2 contacting each other between the two external surfaces. Further, the terrace portion T of the sealing portion TS may include a first surface T1 of the first exterior member P1 and a second surface T2 of the second exterior member P2, and the terrace portion T may include the sealing surface B that is the inner surface of each of the first exterior member P1 and the second exterior member P2 contacting each other between the first surface T1 and the second surface T2.

The first exterior member P1 and the second exterior member P2 may respectively include a first accommodation portion A1 and a second accommodation portion A2, both accommodating different parts of the electrode assembly 110. As the first exterior member P1 and the second exterior member P2 are coupled to each other, the accommodation portion A for completely accommodating the electrode assembly 110 may be provided. For example, the accommodation portion A of the electrode assembly 110 may be formed by connecting the first accommodation portion A1 and the second accommodation portion A2 of the first exterior member P1 and the second exterior member P2 to each other.

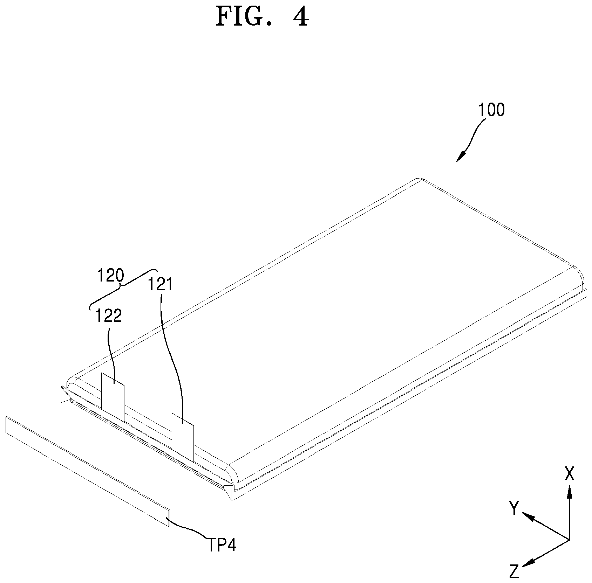

For example, as illustrated in FIG. 3, the side sealing portion S may be at both sides of the battery cell 100 in a width direction (e.g., a Y-axis direction) to be folded along sides of the electrode assembly 110 (e.g., upwardly along the X-axis direction). The pair of side sealing portions S may be folded in one direction (e.g., a direction toward the upper surface of the battery cell 100 or the X-axis direction). As illustrated in FIG. 4, the electrode tab 120 and the terrace portion T are folded in the same direction, and then a connection portion between the terrace portion T and each of the pair of side sealing portions S may be folded inwardly. In other words, while the terrace portion T and the electrode tab 120 are bent, both ends of the side sealing portion S respectively may be bent toward the electrode tab 120. Accordingly, the size of the battery cell 100 may be reduced in the width direction (e.g., the Y-axis direction in FIG. 3) of the battery cell 100, and the side sealing portion S and the terrace portion T may seal the exterior member P more securely.

The protection circuit module 200 may control the charge and discharge operations of the battery cell 100 to prevent overdischarge, overcharge, and the like of the battery cell 100. The protection circuit module 200 may be connected to the battery cell 100 through the electrode tab 120. For example, as illustrated in FIG. 5, the protection circuit module 200 may be on top of the battery cell 100 (along the Z-axis direction) from which the electrode tab 120 protrudes. For example, the fourth tape TP4, as an insulating tape, may be on the electrode tab 120, and the protection circuit module 200 may be on the fourth tape TP4.

The protection circuit module 200 may include the substrate 210, the substrate tab 220, the cut portion 230, an extension portion 240, a connector 250, and a notch 260.

The substrate 210 may include a conductive pattern and a component C (FIG. 7). For example, as illustrated in FIG. 5, the substrate 210 may have a long shape in one direction (e.g., in the Y-axis direction or the width direction of the battery cell 100). The substrate 210 may include at least partially flexible material as a printed circuit board.

The substrate tab 220 may include one or more substrate tabs on the substrate 210 and may be connected to the electrode tab 120. The substrate tab 220 may include a conductor electrically connected to the electrode tab 120, e.g., nickel, copper, aluminum, or the like. For example, as illustrated in FIG. 5, the substrate tab 220 may include two substrate tabs on a surface (e.g., an upper surface) of the substrate 210 to be spaced apart from each other. (e.g., in the Y-axis direction). The number of the substrate tabs 220 may be the same as that of the electrode tabs 120. The substrate tabs 220 may be formed at a position corresponding to (e.g., facing and overlapping) the electrode tabs 120 and connected to the respective electrode tabs 120 through welding and the like, so as to electrically connect the battery cell 100 to the protection circuit module 200. For example, as illustrated in FIG. 5, the substrate tabs 220 may include the first substrate tab 221 connected to the first electrode tab 121 and the second substrate tab 222 connected to the second electrode tab 122.

The substrate tabs 220 may be at least partially bent to fit the electrode tabs 120 therein. The substrate tabs 220 may include a first part 2201 and a second part 2202 bent from the first part 2201. For example, as illustrated in FIG. 7, the first part 2201 may be on (e.g., directly on) the surface (e.g., upper surface) of the substrate 210, and the second part 2202 may be bent from an end of the first part 2201 over the first part 2201 to define a U-shaped structure with the first part 2201, such that an opening of the U- shaped structure may be oriented toward (e.g., face) the electrode tab 120. The first part 2201 and the second part 2202 may be spaced apart from each other in the height direction (e.g., in the Z-axis direction in FIG. 7) of the battery cell 100 to have a space therebetween, and the electrode tab 120 may be provided therebetween (e.g., the electrode tab 120 may be inserted into the opening of the U-shaped structure between the first and second parts 2201 and 2202 of the substrate tab 220).

For example, as illustrated in FIG. 7, the electrode tab 120 may be connected (e.g., directly connected) to the second part 2202 of the substrate tab 220 through, e.g., welding, bolting, or the like. In another example, the electrode tab 120 may be connected (e.g., directly connected) to the first part 2201 of the substrate tab 220. In yet another example, one surface of the electrode tab 120 may be connected (e.g., directly connected) to the first part 2201 and the other surface thereof may be connected (e.g., directly connected) to the second part 2202. Although the first substrate tab 221 is illustrated as an example in FIG. 7, the second substrate tab 222 may have the same shape as the first substrate tab 221 and may be connected to the second electrode tab 122 in the same way. The second part 2202 may be longer than the first part 2201, e.g., an end of the second part 2202 may extend beyond the first part 2201 in the X-axis direction (FIG. 7). Further, the electrode tab 120 may be connected to a lower surface of the second part 2202, e.g., the electrode tab 120 may be connected to a surface of the second part 2202 that faces the first part 2201 (FIG. 7).

The cut portion 230 may include one or two cut portions in the substrate 210. The cut portion 230 may be formed as part of the substrate 210 is cut off inwardly in the width direction (e.g., an X-axis direction in FIG. 6) of the substrate 210. The cut portion 230 may have an opening formed outwardly in the width direction of the substrate 210. The cut portion 230 may be formed at a position corresponding to (e.g., overlapping in the X-axis direction of FIG. 6) the substrate tab 220. For example, as illustrated in FIG. 6, the center of the cut portion 230 may be coaxial with the center of the substrate tab 220. Accordingly, as no conductive pattern or component is in the area of the substrate 210 where the substrate tab 220 is formed, even if the cut portion 230 is formed at a position corresponding to the substrate tab 220, there may be no damage to the actual area of the substrate 210. Further, the cut portion 230 may naturally guide the electrode tab 120 to the substrate tab 220.

As the cut portion 230 is formed at a position corresponding to the position where the electrode tab 120 is connected to the substrate tab 220, a sufficient distance between side surfaces of the electrode tab 120 and the battery cell 100 may be secured. For example, as the cut portion 230 is formed in the substrate 210, even if the electrode tab 120 is pulled taut toward the substrate tab 220, the cut portion 230 may give a free (e.g., empty) space between the substrate 210 and the electrode tab 120. Due to the free space, the substrate 210 may be positioned by being pulled toward one side in the thickness direction of the battery cell 100 (e.g., an X-axis direction in FIG. 7), and thus, the distance L6 between the electrode tab 120 and the one side surface of the battery cell 100 (e.g., the right side surface in FIG. 7) may be sufficiently secured. Likewise, by securing a sufficient distance between an inner surface of a first tape TP1 covering the top of the battery pack 10 and the electrode tab 120, interference between the first tape TP1 and the electrode tab 120, e.g., by external shocks and the like, may be prevented or substantially minimized.

As described above, in a state in which an electrode tab is bent once or more to reduce the overall length of a battery pack, if the electrode tab is pressed by an external load, the electrode tab may be separated or cut from the substrate tab, or a short circuit may occur in the battery cell, causing stability problems. In contrast, as the battery pack 10 according to the present invention has a sufficient space between the substrate 210 and the side surface of the battery cell 100 through the cut portion 230, an interference between the substrate 210 and the component C and the electrode tab 120 on the substrate 210 may be prevented or substantially minimized, so that stability may be secured.

Referring to FIG. 6, the cut portion 230 may have a depth D1 in the width direction of the substrate 210 (e.g., the X-axis direction in FIG. 6). The depth D1 may be less than half of the overall width of the substrate 210 (e.g., in the X-axis direction). Further, the depth D1 may have a certain value such that an end portion of the cut portion 230 does not contact the electrode tab 120. For example, the depth D1 may be about 25% to about 45%, preferably about 30% to about 40%, of the overall width of the substrate 210. The depth D1 satisfying the above range may prevent the interference between the electrode tab 120 and the substrate 210 without excessively reducing stiffness (e.g., rigidity) of the substrate 210. The cut portion 230 may be spaced apart from the end portion of the substrate tab 220, e.g., in the X-axis direction.

The cut portion 230 may include sections having different widths, e.g., the cut portion 230 may include varying widths in the Y-axis direction. For example, the cut portion 230 may have a shape having a width gradually increasing from the central portion of the substrate 210 to the outside. For example, the cut portion 230 may include an innermost portion 2301 adjacent to the center in the width direction of the substrate 210 and having a width greater than that of the electrode tab 120, an outermost portion 2303 outside in the width direction of the substrate 210, and a connection portion 2302 between the innermost portion 2301 and the outermost portion 2303. The width of the cut portion 230 gradually increases in the order of the innermost portion 2301, the connection portion 2302, and the outermost portion 2303, and connection segments between the innermost portion 2301, the connection portion 2302, and the outermost portion 2303 may have a curved shape. For example, as illustrated in FIG. 6, the innermost portion 2301 of the cut portion 230 may have a width L1, and the outermost portion 2303 of the cut portion 230 may have a width L3 that is greater than the width L1. Further, the connection portion 2302 between the innermost portion 2301 of the cut portion 230 and the outermost portion 2303 may have a width L2 that is greater than the width L1 and less than the width L3. As such, as the cut portion 230 has a width that increases toward the side closer to the electrode tab 120 and decreases inwardly, the electrode tab 120 may be stably aligned in the cut portion 230. The connection segments between the innermost portion 2301, the connection portion 2302, and the outermost portion 2303 may have a curved shape. Accordingly, even if the electrode tab 120 is brought into contact with a corresponding connection segment, the electrode tab 120 and the connection segment may not be damaged by each other, and the electrode tab 120 may be smoothly guided inwardly along the shape of the connection segment.

The widths L1, L2, and L3 may be all greater than the width of the electrode tab 120, e.g., in the Y-axis direction. The width L1 may be less than the width of the substrate tab 220 (e.g., in the Y-axis direction), the width L2 may be substantially the same as the width of the substrate tab 220, and the width L3 may be greater than the width of the substrate tab 220. Accordingly, the electrode tab 120 guided toward the innermost portion 2301 via the outermost portion 2303 and the connection portion 2302 may be stably connected to the substrate tab 220 in the innermost portion 2301.

The cut portion 230 may include a first cut portion 231 and a second cut portion 232. The first cut portion 231 may be formed at one side of the substrate 210 to correspond to the first substrate tab 221, and the second cut portion 232 may be formed at the other side of the substrate 210 to correspond to the second substrate tab 222. The first cut portion 231 and the second cut portion 232 may have the same shape and size. For example, as illustrated in FIG. 6, each of the first and second cut portions 231 and 232 may include varying widths in the Y-axis direction defined by the innermost portion 2301, the connection portion 2302, and the outermost portion 2303.

While the protection circuit module 200 is connected to the battery cell 100, the electrode tab 120 may be close to the substrate 210. For example, as illustrated in FIG. 7, the electrode tab 120 may include the first bending portion 1201 and the second bending portion 1202, and the first bending portion 1201 may substantially contact an imaginary line extending along the side surface of the substrate 210 or be at least close to the imaginary line. In other words, the inner surface of the first bending portion 1201 may be in contact with the imaginary line extending along the edge of the side surface of the substrate 210 where the cut portion 230 is formed. That is, the inner surface of the first bending portion 1201 facing the cut portion 230 in the X-axis direction (FIG. 7) may be in contact with an imaginary line connecting opposite edges of the outermost portion 2303 in the Y-axis direction (FIG. 6). Further, at least a partial section of the first bending portion 1201 may be located at the same height as the cut portion 230. In other words, even if the electrode tab 120 maintains a tightly pulled state toward the substrate 210, the cut portion 230 is formed in the area of the substrate 210 corresponding to the electrode tab 120, so that an interference between the substrate 210 and the electrode tab 120 may be prevented (e.g., due to an empty space defined by the cut portion 230 that overlaps the first bending portion 1201 and a part of the second bending portion 1202, direct contact between the substrate 210 and the first bending portion 1201 and the part of the second bending portion 1202 of the electrode tab 120 may be prevented).

As illustrated in FIG. 5, the extension portion 240 may extend from the substrate 210 to connect the substrate 210 to the connector 250. For example, as illustrated in FIG. 5, the extension portion 240 may extend from the end portion of the substrate 210 in the length direction (e.g., the Y-axis direction in FIG. 5) of the substrate 210 and then in a direction (e.g., a Z-axis direction or the thickness direction of the substrate 210 in FIG. 5) different from the length direction of the substrate 210. The extension portion 240 may have a width that is the same as or less than the width of the protection circuit module 200 and may include a deformable flexible material. The extension portion 240 may extend toward the battery cell 100 (e.g., downwardly on the Z-axis direction along the side surface of the battery cell 100), and the connector 250 may be at the end portion of the extension portion 240. The connector 250 may connect the protection circuit module 200 to an external device outside the battery pack 10, e.g., an application, a controller, or the like.

As illustrated in FIG. 6, the notch 260 may include one or more notches formed in the substrate 210, and may prevent deformation, e.g., distortion of the substrate 210 and the like. For example, the notch 260 may be formed at a position corresponding to the substrate tab 220 and may prevent or substantially minimize deformation of the substrate 210 occurring when the substrate tab 220 is connected to the substrate 210 or the substrate tab 220 is connected to the electrode tab 120. The notch 260 may be provided in the same number as the number of the substrate tabs 220. For example, the notch 260 may include a first notch 261 and a second notch 262 formed at positions respectively corresponding to the first substrate tab 221 and the second substrate tab 222, and formed such that part of the substrate 210 is inwardly cut in the width direction of the substrate 210 (e.g., the X-axis direction in FIG. 6). The notch 260 may have a width L4 in the Y-axis direction that is less than the width of each of the substrate tab 220 and the cut portion 230. The notch 260 may have a depth D2 in the width direction of the substrate 210 (e.g., the X-axis direction in FIG. 6). The depth D2 may be less than half of the overall width of the substrate 210. The notch 260 may be coaxial with the substrate tab 220 and the cut portion 230.

The battery pack 10 may include a tape. The tape may be between the battery cell 100 and the protection circuit module 200 or outside the battery cell 100 and/or the protection circuit module 200. The tape may insulate the battery cell 100 and the protection circuit module 200 from each other to protect the battery cell 100 and the protection circuit module 200 from external shocks. The tape may include an insulating and/or flame retardant material, e.g., polytetrafluoroethylene. The tape may include the first tape TP1, a second tape TP2, a third tape TP3, and the fourth tape TP4.

The first tape TP1 may be on top of the battery cell 100 to cover the protection circuit module 200 and the battery cell 100. For example, as illustrated in FIG. 1, while the battery cell 100 and the protection circuit module 200 are connected to each other, the first tape TP1 may be on top of the protection circuit module 200 to cover the top portions of the front and rear surfaces of the battery cell 100. Accordingly, as illustrated in FIG. 7, the first tape TP1 may be in the form of surrounding not only the component C, but also the protection circuit module 200 and the electrode tab 120. The first tape TP1 may be spaced apart from the electrode tab 120 by the distance L6, and spaced apart from the opposite end portion of the substrate 210 (i.e., an opposite end of the substrate 210 relative to the electrode tab 120) by a distance L8. The distance L6 between the electrode tab 120 and the first tape TP1 may be greater than the distance L8 between the first tape TP1 and the opposite end of the substrate 210 (e.g., the opposite end of the substrate 210 may be a second side opposite to a first end of the substrate 210 where the electrode tab 120 is located). The distance L6 may be about two times to about five times the distance L8. As the distances L6 and L8 satisfy the corresponding ranges, a sufficient distance between the electrode tab 120 and the battery cell 100 is secured at one side of the substrate 210 where the cut portion 230 is formed, and simultaneously, the distance between the substrate 210 and the battery cell 100 at the other side of the substrate 210 may be prevented from being excessively narrow.

The second tape TP2 may be on both side surfaces of the battery cell 100. For example, as illustrated in FIG. 1, the second tape TP2 may be between the extension portion 240 of the protection circuit module 200 and the battery cell 100. The second tape TP2 may prevent the extension portion 240 from being in direct contact with the battery cell 100. The upper portion of the second tape TP2 may be on the upper surface of the battery cell 100 and the lower portion thereof may be on the lower surface of the battery cell 100. The second tape TP2 may be connected to the fourth tape TP4 or formed integrally with the fourth tape TP4.

The third tape TP3 may be at the top portion of the battery cell 100 before the electrode tab 120 and the terrace portion T are folded, and may prevent the top portion of the battery cell 100 from directly contacting the electrode tab 120. For example, as illustrated in FIG. 3, the third tape TP3 may have a length corresponding to the width (e.g., the Y-axis direction) of the battery cell 100, and may be at the top portion of the battery cell 100. In this state, the electrode tab 120 and the terrace portion T may be folded toward the upper surface of the exterior member P (e.g., the first exterior member P1), and the side sealing portions S at both sides may also be folded inwardly.

The fourth tape TP4 may be on the electrode tab 120 and/or the insulating tape 130. For example, as illustrated in FIG. 4, while the electrode tab 120 and the terrace portion T are in a bent state, the fourth tape TP4 may be provided thereon. The fourth tape TP4 may cover part of the electrode tab 120, the terrace portion T, the insulating tape 130, and the side sealing portions S at both sides altogether, and thus, sealing and insulation between components may be secured.

The electrode assembly 110 may include, on an upper surface thereof, a first area 1101 at one side with respect to the electrode tab 120 and having a relatively large size and a second area 1102 at the other side of the electrode tab 120 and having a size less than the size of the first area 1101. For example, as illustrated in FIG. 7, the first area 1101 and the second area 1102 are areas on the upper surface of the electrode assembly 110 where the electrode tab 120 is formed, in which the first area 1101 may be on the right side of the electrode tab 120 and the second area 1102 may be on the left side of the electrode tab 120 with reference to the drawings. Further, the size of the first area 1101 may be greater than the size of the second area 1102. The electrode tab 120 may be biased to one side (e.g., to the left in the drawing) from the center of the electrode assembly 110 in the thickness direction (e.g., the X-axis direction in FIG. 7) of the battery cell 100. The electrode tab 120 may be bent toward the first area 1101, and the cut portion 230 may be above the first area 1101.

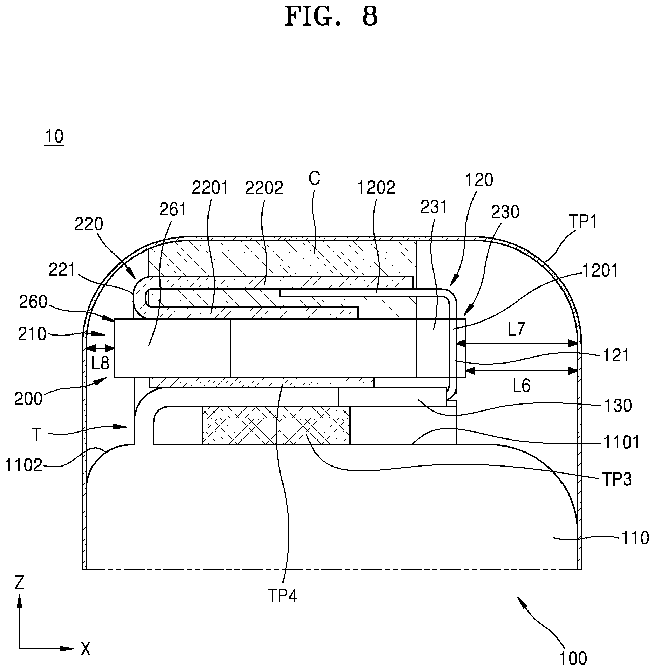

In another example, as illustrated in FIG. 8, at least part of the electrode tab 120 may be inside (e.g., extend through and perpendicularly to) the cut portion 230. For example, at least part of the first bending portion 1201 of the electrode tab 120 may be inside the cut portion 230. In other words, the first bending portion 1201 may be inside a closed contour formed by the profile of the cut portion 230 and the side surface of the substrate 210 where the cut portion 230 is formed. Accordingly, a distance L7 between the first bending portion 1201 and the side surface of the battery cell 100 (or the first tape TP1) may be larger than the distance L6 between the substrate 210 and the side surface of the battery cell 100 (or the first tape TP1). As such, as the electrode tab 120 is at the inner side in the width direction of the substrate 210, the electrode tab 120 may be effectively prevented from being pressed by external shocks.

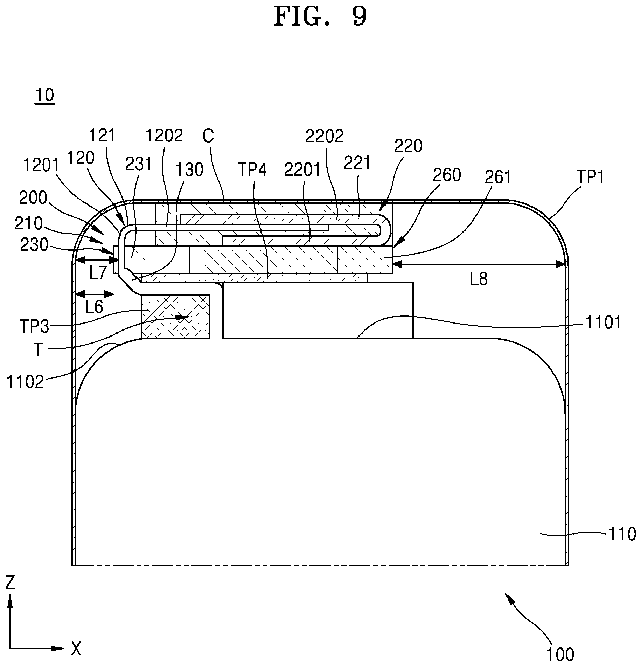

In yet another example, as illustrated in FIG. 9, the electrode tab 120 may be led out in a different direction to be connected to the substrate tab 220. In other words, the electrode tab 120 may be bent toward the second area 1102, and the cut portion 230 may be above the second area 1102. That is, unlike extending toward one side (the right side in the drawing) in FIGS. 7 and 8, the electrode tab 120 extends toward the other side (the left side in FIG. 9). Further, the cut portion 230 and the substrate tab 220, which are formed in the substrate 210, may also correspond to the electrode tab 120 (on the left side in the drawing). The electrode tab 120 that extends may be connected to the substrate tab 220 via the cut portion 230. For example, as illustrated in FIG. 9, the third tape TP3 may be below the terrace portion T, and in the terrace portion T, the insulating tape 130 may be inclined upwardly by a certain angle. At the end portion of the insulating tape 130, the first bending portion 1201 may extend upwardly to pass through the cut portion 230. In other words, as part of the electrode tab 120, at least part of the first bending portion 1201 may be inside the cut portion 230. At the end portion of the first bending portion 1201, the second bending portion 1202 extends toward the substrate tab 220 to be connected to the substrate tab 220. The distance between the substrate 210 and one side surface of the battery cell 100 (the left side surface in the drawing or the inner surface of the first tape TP1) may be L6, and the distance between the electrode tab 120 (the first bending portion 1201) and one side surface of the battery cell 100 (the left side surface in the drawing or the inner surface of the first tape TP1) may be L7. The distance L6 may be shorter than the distance L7. In other words, a horizontal distance between the electrode tab 120 and one side surface of the battery cell 100 may be larger than a horizontal distance between one side of the substrate 210 where the electrode tab 120 is located and the one side surface of the battery cell 100. Further, the distance between the opposite end portion of the substrate 210 and the side surface of the battery cell 100 (the inner surface of the first tape TP1) may be L8. The distance L8 may be longer than the distance L7. As such, as the electrode tab 120 extends from the side where the distance from the side surface of the battery cell 100 is relatively short, and then is connected to the substrate tab 220, the extension length of the electrode tab 120 may be reduced. Furthermore, as a large space is secured in one side on top of the battery cell 100 (the right side in FIG. 9), a good connection to another application may be maintained through the space.

By way of summation and review, in order to reduce the overall length of a battery pack, a terrace part of the battery cell may be bent and formed in a horizontal structure. However, if the terrace part is pressed in a bent state, the electrode assembly may be pressed such that tabs of the battery cell are cut or short-circuited.

In contrast, one or more embodiments include a battery pack with a sufficient space between an electrode tab of a battery cell and an outer surface of the battery cell. That is, as the battery pack according to embodiments includes a cut portion formed in a substrate of a protection circuit module and the substrate is moved to one side, an electrode tab may be stably connected to the protection circuit module.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack (10), comprising:
a battery cell (100) including an electrode assembly (110) and an electrode tab (120) extending from the electrode assembly (110); and
a protection circuit module (200) on the battery cell (100), the protection circuit module (200) including:
a substrate (210),
a substrate tab (220) on the substrate (210), the substrate tab (220) being connected to the electrode tab (120), and
a cut portion (230) in the substrate (210) in a width direction of the substrate (210) at a position corresponding to the substrate tab (220),
wherein at least a part of the electrode tab (120) is at a same height as the cut portion (230).

2. The battery pack (10) as claimed in claim 1, wherein the electrode tab (120) is bent at least once, and a bent section of the electrode tab (120) overlaps the cut portion (230).

3. The battery pack (10) as claimed in claim 1 or 2, wherein the electrode tab (120) includes:
a first bending portion (1201) extending in a height direction of the battery cell (100), at least a part of the first bending portion (1201) being at a same height as the cut portion (230); and
a second bending portion (1202) extending from an end portion of the first bending portion (1201) in a direction crossing an extension direction of the first bending portion (1201), the second bending portion (1202) being connected to the substrate tab (220).

4. The battery pack (10) as claimed in claim 3, wherein a distance between the first bending portion (1201) and the substrate (210) is shorter than a distance (L6) between the first bending portion (1201) and one side surface of the battery cell (100); and/or
wherein an inner surface of the first bending portion (1201) is in contact with an imaginary line extending along an edge of a side surface of the substrate (210) where the cut portion (230) is formed.

5. The battery pack (10) as claimed in claim 3, wherein a distance (L6) between a first side surface of the substrate (210), where the cut portion (230) is formed, and a first side surface of the battery cell (100) adjacent the cut portion (230) is about two times to about five times a distance (L8) between a second side surface of the substrate (210) and a second side surface of the battery cell (100); and/or
wherein the first bending portion (1201) is inside the cut portion (230).

6. The battery pack (10) as claimed in one of the preceding claims, wherein the cut portion (230) gradually widens outwardly in the width direction of the substrate (210), and
wherein:
the cut portion (230) includes:
an innermost portion (2301) adjacent to a center of the substrate (210) in the width direction of the substrate (210), the innermost portion (2301) having a width (L1) in a length direction of the substrate (210) that is greater than a width of the electrode tab (120) in the length direction of the substrate (210);
an outermost portion (2303) adjacent to an outside of the substrate (210); and
a connection portion (2302) between the innermost portion (2301) and the outermost portion (2303), and
a width of the cut portion (230) gradually increases in the length direction of the substrate (210) in an order of the innermost portion (2301), the connection portion (2302), and the outermost portion (2303), wherein connection portions between the innermost portion (2301), the connection portion (2302), and the outermost portion (2303) have a curved shape.

7. The battery pack (10) as claimed in one of the preceding claims, wherein the cut portion (230) is spaced apart from an end portion of the substrate tab (220), and a depth (D1) of the cut portion (230) in the width direction of the substrate (210) has a size less than half of a width of the substrate (210); and/or
wherein a center of the cut portion (230) is coaxial with a center of the substrate tab (220).

8. The battery pack (10) as claimed in one of the preceding claims, wherein the battery cell (100) further includes an exterior member (P) accommodating the electrode assembly (110), the exterior member (P) including a sealing portion (TS) at an edge of the battery cell (100), and wherein the sealing portion (TS) includes:
a terrace portion (T) on the battery cell (100) and overlapping the electrode tab (120); and
a side sealing portion (S) at opposite sides of the exterior member (P), the side sealing portion (S) being bent toward the electrode tab (120) while the terrace portion (T) and the electrode tab (120) are in a bent state.

9. The battery pack (10) as claimed in claim 8, further comprising an insulating tape (130) on the battery cell (100) and the protection circuit module (200), the insulating tape (130) including a first tape (TP1) on the protection circuit module (200) and covering top portions of a front surface and a rear surface of the battery cell (100), wherein a distance (L7) between the electrode tab (120) and the first tape (T1) is greater than a distance (L6) between the first tape (TP1) and a side of the substrate (210) adjacent to the electrode tab (120).

10. The battery pack (10) as claimed in claim 9, wherein the insulating tape (130) further includes:
a second tape (TP2) on opposite sides of the battery cell (100) and between the protection circuit module (200) and the battery cell (100);
a third tape (TP3) between a top portion of the battery cell (100) and each of the terrace portion (T) that is bent and the electrode tab (120); and
a fourth tape (TP4) between the bent terrace portion (T) and the protection circuit module (200).

11. The battery pack (10) as claimed in one of the preceding claims, wherein:
the substrate tab (220) includes:
a first part (2201) on the substrate (210); and
a second part (2202) extending from the first part (2201), bent toward the first part (2201), and spaced apart from the first part (2201), and
a part of the electrode tab (120) is between the first part (2201) and the second part (2202), the part of the electrode tab (120) being connected to at least one of the first part (2201) and the second part (2202).

12. The battery pack (10) as claimed in claim 11, wherein the second part (2202) is longer than the first part (2201), and the electrode tab (120) is connected to the second part (2202).

13. The battery pack (10) as claimed in one of the preceding claims, wherein the protection circuit module (200) includes a notch (260) in the substrate (210) at a position corresponding to the substrate tab (220), the notch (260) having a center that is coaxial with a center of the cut portion (230), and having a width (L4) narrower than a width of the cut portion (230).

14. The battery pack (10) as claimed in one of the preceding claims, wherein:
the electrode assembly (110) includes:
a first area (1101); and
a second area (1102) adjacent to the first area (1101), the second area (1102) having a smaller size than a size of the first area (1101), and
the electrode tab (120) is biased to one side from a center of the electrode assembly (110) in a thickness direction of the battery cell (100).

15. The battery pack (10) as claimed in claim 14, wherein the electrode tab (120) is bent toward the first area (1101), and the cut portion (230) is above the first area (1101); and/or
wherein:
the electrode tab (120) is bent toward the second area (1102),
the cut portion (230) is above the second area (1102), and
a horizontal distance between the electrode tab (120) and one side surface of the battery cell (100) is longer than a horizontal distance between one side of the substrate (210) where the electrode tab (120) is located and the one side surface of the battery cell (100).
